# EUROPÄISCHE PATENTSCHRIFT

(11) **EP 4 025 448 B1**
(45) Veröffentlichungstag und Bekanntmachung des Hinweises auf die Patenterteilung: **26.11.2025**
(21) Anmeldenummer: 20743646.0
(22) Anmeldetag: 17.07.2020
(51) Int. Cl.: B60K 35/10, B60K 35/20, B60K 35/25, B60K 35/60

(54) **BEDIENSYSTEM FÜR EIN FAHRZEUG UND VERFAHREN ZUM BETREIBEN EINES BEDIENSYSTEMS FÜR EIN FAHRZEUG**
OPERATING SYSTEM FOR A VEHICLE AND METHOD FOR OPERATING AN OPERATING SYSTEM FOR A VEHICLE
SYSTÈME DE COMMANDE POUR UN VÉHICULE ET PROCÉDÉ POUR FAIRE FONCTIONNER UN SYSTÈME DE COMMANDE POUR UN VÉHICULE

(30) Priorität: 02.09.2019 DE 102019213211
(43) Veröffentlichungstag der Anmeldung: 13.07.2022
(73) Patentinhaber: VOLKSWAGEN AKTIENGESELLSCHAFT, 38440 Wolfsburg (DE)
(72) Erfinder: WENGELNIK, Heino, 38442 Wolfsburg (DE)
(86) Internationale Anmeldenummer: PCT/EP2020/070247
(87) Internationale Veröffentlichungsnummer: WO 2021/043487

(56) Entgegenhaltungen:
- EP-A2- 0 516 228
- EP-B1- 0 516 228
- DE-A1- 10 326 215
- DE-A1- 102012 020 022
- DE-A1- 102013 000 744
- DE-A1- 102015 200 010
- DE-B4- 102012 020 022

## Beschreibung

Die vorliegende Erfindung betrifft ein Bediensystem für ein Fahrzeug und ein Verfahren zum Betreiben eines Bediensystems für ein Fahrzeug.

In Fahrzeugen, insbesondere Kraftfahrzeugen, ist eine Vielzahl von elektronischen Einrichtungen vorgesehen, deren Bedienung dem Fahrer oder einem anderen Fahrzeuginsassen ermöglicht werden muss. Zu diesen Einrichtungen gehören beispielsweise ein Navigationssystem, eine Vielzahl von Fahrerassistenzsystemen sowie Kommunikations- und Multimediaanwendungen, die zum Beispiel eine Telefonanlage und Einrichtungen zur Wiedergabe von Musik und Sprache umfassen, etwa ein Radio oder einen CD-Spieler.

Beim Bedienen der vielfältigen Einrichtungen im Fahrzeug kommt es wesentlich darauf an, dass Bedienelemente für den Nutzer, das heißt beispielsweise den Fahrer des Fahrzeugs, leicht erreichbar und bedienbar ausgebildet und angeordnet sind. Außerdem werden häufig Tasten oder Bedienelemente mit festen Funktionen oder Eingabemöglichkeiten versehen, sodass sich der Nutzer nicht zwischen verschiedenen Bedienweisen umstellen muss.

In der DE 10 2010 012 239 A1 wird eine Bedienungs- und Anzeigevorrichtung vorgeschlagen, bei der ein virtuelles Bild der Bedienungseinrichtung angezeigt wird, wenn sich ein Nutzer ihr annähert, sodass die zur Verfügung stehenden Bedienmöglichkeiten sichtbar werden.

Die DE 10 2015 200 010 A1 beschreibt eine Anwenderschnittstelle, bei der ein Leuchtmittel durch eine Abdeckung mit einem transluzenten Bereich nach Art einer Maske verdeckt wird. Wenn sich eine Hand dieser Abdeckung annähert, wird die Lichtleistung des unterhalb der Abdeckung angeordneten Leuchtmittels erhöht, sodass Oberflächenbereiche für die Bedienung sichtbar werden.

Die DE 10 2013 000744 A1, die DE 103 26 215 A1, die EP 0 516 228 A2 und die
DE 10 2012 020022 A1 beschreiben weitere Bediensysteme für Fahrzeuge sowie Verfahren zum Betreiben solcher Bediensysteme.

Der vorliegenden Erfindung liegt die Aufgabe zugrunde, ein Bediensystem, ein Verfahren zu seinem Betrieb und ein Kraftfahrzeug mit dem Bediensystem bereitzustellen, wobei der Nutzer leicht erfassen kann, welche Bedienungsmöglichkeiten ihm zur Verfügung stehen.

Erfindungsgemäß wird diese Aufgabe durch ein Bediensystem mit den Merkmalen des Anspruchs 1 und ein Verfahren mit den Merkmalen des Anspruchs 8 gelöst. Vorteilhafte Ausgestaltungen und Weiterbildungen ergeben sich aus den abhängigen Ansprüchen.

Das erfindungsgemäße Bediensystem für ein Fahrzeug umfasst ein Bedienelement, welches einen ersten und einen zweiten Bedienbarkeitszustand aufweist, eine Beleuchtungseinheit zum Beleuchten des Bedienelements mit einem ersten oder einem zweiten Beleuchtungsparameter, eine Erfassungseinheit zum Erfassen einer Betätigungsabsicht und des Bedienbarkeitszustands des Bedienelements und eine mit dem Bedienelement, der Beleuchtungseinheit und der Erfassungseinheit gekoppelte Steuereinheit. Dabei ist die Steuereinheit dazu eingerichtet, in Abhängigkeit von dem erfassten Bedienbarkeitszustand und in Abhängigkeit von der erfassten Betätigungsabsicht den ersten oder zweiten Beleuchtungsparameter der Beleuchtungseinheit einzustellen. Insbesondere wird zum Einstellen des ersten oder zweiten Beleuchtungsparameters ein erstes beziehungsweise ein zweites Steuersignal erzeugt und an die Beleuchtungseinheit übertragen.

Bei dem Bediensystem kann dem Nutzer vorteilhafterweise bereits zu einem sehr frühen Zeitpunkt angezeigt werden, in welchem Bedienbarkeitszustand sich ein Bedienelement befindet.

Insbesondere ist für die Beleuchtungseinheit ein Grundzustand definiert, bei dem keine Betätigungsabsicht erfasst wurde. Die Beleuchtung des Bedienelements kann dann zum Beispiel mit einem Beleuchtungsparameter erfolgen, der unabhängig von dem Bedienbarkeitszustand des Bedienelements gebildet ist. Insbesondere ist in diesem Grundzustand, wenn keine Betätigungsabsicht erfasst wurde, der erste Beleuchtungsparameter für die Beleuchtungseinheit eingestellt. Nach dem Erfassen der Betätigungsabsicht wird dann zum Beispiel entweder der erste oder der zweite Beleuchtungsparameter eingestellt, in Abhängigkeit von dem aktuellen Bedienbarkeitszustand des Bedienelements.

Dadurch wird einem Nutzer vorteilhafterweise deutlich und leicht erfassbar mittgeteilt, in welchem Bedienbarkeitszustand sich das betätigte Bedienelement derzeit befindet. Insbesondere umfasst das Bediensystem mehrere Bedienelemente, die verschiedene Bedienbarkeitszustände einnehmen können.

Bei dem erfindungsgemäßen Bediensystem ist der erste Bedienbarkeitszustand des Bedienelements ein aktivierter Bedienbarkeitszustand des Bedienelements und der zweite Bedienbarkeitszustand des Bedienelements ist ein deaktivierter Bedienbarkeitszustand des Bedienelements. Dadurch kann der Nutzer vorteilhafterweise leicht erfassen, ob er durch seine Betätigung eine Bedienung vornehmen kann oder nicht. Dadurch kann zudem vorteilhafterweise nach dem Erfassen einer Betätigungsabsicht anhand der Beleuchtung erfasst werden, ob das Bedienelement in dem ersten oder zweiten Bedienbarkeitszustand ist.

Erfindungsgemäß wird bei einem aktivierten Bedienbarkeitszustand in Abhängigkeit von einer Betätigung ein Eingabesignal erzeugt und an eine Einrichtung des Fahrzeugs übertragen, etwa an eine bedienbare Funktionseinheit. Anhand des Eingabesignals wird eine Eingabe vorgenommen, etwa eine Eingabe von Daten, eine Einstellung oder ein Aktivieren oder Deaktivieren einer Funktionalität. Bei einem deaktivierten Bedienbarkeitszustand wird kein Eingabesignal erzeugt und/oder ein solches Signal führt nicht zu einer Bedienung oder Eingabe. Das heißt, das Betätigen des Bedienelements führt zu keiner Bedienung, insbesondere nicht zu einer Bedienung der Funktionseinheit.

Die Beleuchtung erfolgt auf an sich bekannte Weise. Hierzu erzeugt die Beleuchtungseinheit eine Lichtemission mit dem eingestellten Beleuchtungsparameter, der zum Beispiel eine Intensität, Farbe oder dynamische Veränderung der Lichtemission betreffen kann. Ein dynamisch veränderlicher Beleuchtungsparameter betrifft insbesondere ein periodisch erzeugtes Lichtsignal, etwa eine blinkende oder pulsierende Lichtemission oder ein Lauflicht, oder eine einmalig ablaufende Lichtanimation, etwa mit einer schwächer werdenden und verschwindenden Lichtemission.

Ferner kann der Beleuchtungsparameter eine Form betreffen, etwa ein grafisches Element wie ein Symbol oder eine geometrische Form. Bei dem ersten und zweiten Beleuchtungsparameter können verschiedene Formen beleuchtet werden.

Die Beleuchtung wird dabei so erzeugt, dass ein von einem räumlich lokalisierbaren Bereich, der dem Bedienelement zugeordnet ist, eine Lichtemission ausgeht. Zum Beispiel kann eine dem Bedienelement zugeordnete Fläche beleuchtet werden, wobei die daher wahrnehmbare Lichtemission etwa durch Reflexion an einer beleuchteten Fläche oder durch Transmission des Lichts im Bereich des Bedienelements erzeugt werden kann. Eine Beleuchtung kann etwa durch Anstrahlen oder durch Hinterleuchtung eines mittels einer Maske gebildeten Lichtsymbols erzeugt werden. Bei einem weiteren Beispiel kann bei dem Bedienelement ein Display mit mehreren separat ansteuerbaren Bildpunkten angeordnet sein, etwa ein entsprechend dimensioniertes Display.

Das Bedienelement ist insbesondere als analoges Bedienelement ausgebildet, dem ein statischer Erfassungsbereich, insbesondere eine unveränderliche Fläche, zugeordnet ist. Der Erfassungsbereich kann mittels der Beleuchtung zumindest teilweise beleuchtet werden. Der Erfassungsbereich ist in diesem Fall nicht frei programmierbar ausgebildet, wie dies etwa bei Touchscreens der Fall ist, auf denen eine Bedienoberfläche mit frei positionierbaren und dimensionierbaren Bedienflächen ausgebildet werden kann, sondern statisch angeordnet und dimensioniert.

Erfindungsgemäß ist die Steuereinheit dazu eingerichtet, den ersten Beleuchtungsparameter einzustellen, wenn für das Bedienelement der erste Bedienbarkeitszustand erfasst wurde, und den zweiten Beleuchtungsparameter einzustellen, wenn für das Bedienelement der zweite Bedienbarkeitszustand erfasst wurde. Dabei ist der erste Beleuchtungsparameter insbesondere so ausgebildet, dass das Bedienelement mit einer helleren Intensität beleuchtet wird als bei dem zweiten Beleuchtungsparameter. Dadurch kann das Bedienelement vorteilhafterweise je nach seinem Bedienbarkeitszustand ein- und ausgeblendet werden.

Insbesondere wird nach dem Erfassen einer Betätigungsabsicht ein Bedienelement im zweiten Bedienbarkeitszustand, insbesondere im deaktivierten Zustand, gegenüber anderen Bedienelementen ausgeblendet oder nicht beleuchtet, etwa indem die Beleuchtung nunmehr mit verringerter Intensität erfolgt oder indem die Beleuchtung hier ganz abgeschaltet wird. Alternativ oder zusätzlich kann ein Bedienelement im zweiten Bedienbarkeitszustand besonders markiert oder hervorgehoben werden, etwa durch eine Beleuchtung mit einer bestimmten Farbe oder mit einem dynamischen Effekt, etwa einem Blinken oder Pulsieren.

Insbesondere kann auf diese Weise ein temporärer Black-Panel-Effekt erzeugt werden, bei dem zunächst alle potentiell verfügbaren Bedienelemente beleuchtet werden und daher sichtbar sind, wobei nach dem Erfassen der Betätigungsabsicht die Beleuchtung der inaktivierten Bedienelemente unterbrochen wird, sodass diese für den Nutzer nicht oder weniger deutlich sichtbar sind.

Wird eine Betätigungsabsicht für ein Bedienelement im ersten Bedienbarkeitszustand erfasst, insbesondere in einem aktivierten Bedienbarkeitszustand, so kann hier der gleiche Beleuchtungsparameter eingestellt bleiben. Bei einer anderen Ausbildung unterscheidet sich auch der erste Beleuchtungsparameter, der bei einer Betätigungsabsicht für ein Bedienelement im ersten Bedienbarkeitszustand eingestellt wird, von einem Beleuchtungsparameter, der eingestellt war, eher eine Betätigungsabsicht erfasst wurde. Beispielsweise wird ein Bedienelement mit dem ersten Bedienbarkeitszustand, insbesondere im aktivierten Bedienbarkeitszustand, beim Vorliegen einer Betätigungsabsicht hervorgehoben, etwa indem es heller, mit einer veränderten Farbe und/oder mit einem dynamischen Effekt beleuchtet wird.

Erfindungsgemäß ist die Erfassungseinheit dazu eingerichtet, die Betätigungsabsicht anhand einer Annäherung eines Betätigungsobjekts an das Bedienelement zu erfassen, wobei die Annäherung erfassbar ist, wenn ein Abstand zwischen dem Betätigungsobjekt und dem Bedienelement einen vorgegebenen Nahbereichs-Schwellenwert unterschreitet.

Dadurch wird vorteilhafterweise ein besonders zuverlässiger Indikator für die Betätigungsabsicht ausgewertet. Bei einer anderen Ausbildung kann die Betätigungsabsicht erkannt werden, wenn eine Betätigung tatsächlich erfolgt.

Als Annäherung kann ein Eintreten des Betätigungsobjekts, etwa eines Körperteils des Nutzers, in einen bestimmten räumlichen Bereich um das Bedienelement verstanden werden. Der räumliche Bereich ist beispielsweise durch einen Maximalabstand von den Bedienelement definiert, etwa bis zu 5 cm, bevorzugt bis zu 3 cm. Die Annäherung kann ferner alternativ oder zusätzlich anhand einer Bewegungsrichtung des Betätigungsobjekts erfasst werden, wobei die Annäherung eine Bewegung in Richtung des Bedienelements umfasst.

Dabei kann insbesondere ein Abstand des Betätigungsobjekts zu einer dem Bedienelement zugeordneten Position, eine Veränderung des Abstands und/oder eine Richtungsinformation, etwa eine Bewegungsrichtung des Betätigungsobjekts relativ zu dem Bedienelement, berücksichtigt werden. Zum Beispiel kann eine Annährung nur dann erfasst werden, wenn eine Bewegung auf eine bestimmte Position zu erfasst wird. Die dem Bedienelement zugeordnete Position kann eine Position oder ein Bereich sein, in dem eine Betätigung ausgeführt werden kann, etwa durch eine Berührung oder ein Ausüben von Druck. Alternativ oder zusätzlich kann eine Annäherung an eine andere Position erfasst werden, etwa an eine Einrichtung, die das Betätigungsobjekt umfasst, etwa eine "Bedieninsel", bei der mehrere Bedienelemente gruppiert sind.

Das Betätigungsobjekt kann beispielsweise ein Finger oder eine Hand eines Nutzers sein. Es kann sich prinzipiell um jedes Objekt handeln, dass dazu geeignet ist, eine Betätigung an dem Bedienelement vorzunehmen.

Die Annäherung kann auf an sich bekannte Weise erfasst werden. Die Annäherung kann etwa durch einen kapazitiven Sensor erfasst werden. Die Annäherung kann ferner beispielsweise mittels einer Reflektionslichtschranke erfasst werden, die mindestens ein Leuchtmittel zum Emittieren von elektromagnetischer Detektionsstrahlung in einen Detektionsbereich und ein Empfangselement zum Detektieren eines an dem Betätigungsobjekt gestreuten und/oder reflektierten Anteils der Detektionsstrahlung umfassen. Sie kann insbesondere dazu ausgebildet sein, das Betätigungsobjekt in dem Detektionsbereich anhand der Intensität der empfangenen Detektionsstrahlung zu erkennen. Die Erfassungseinheit kann ferner verschiedene Leuchtmittel für die einzelnen Detektionszonen umfassen, die jeweils elektromagnetische Detektionsstrahlung in die jeweilige Detektionszone emittieren. Des Weiteren kann eine Modulationsvorrichtung zum Modulieren der emittierten Detektionsstrahlung vorgesehen sein, so dass sich die Detektionsstrahlung, die in die einzelnen Detektionszonen emittiert wird, jeweils hinsichtlich ihrer Modulation unterscheidet. In diesem Fall kann die Erfassungseinheit auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungsobjekt gestreut oder reflektiert wurde.

Bei einer weiteren Ausbildung umfasst die Annäherung eine Berührung des Bedienelements durch das Betätigungsobjekt. In diesem Fall kann die Betätigung etwa bereits durch die Berührung erfolgen oder sie kann durch Ausüben eines Drucks an der Berührungsposition erfolgen.

Bei einer Ausbildung ist die Betätigungsabsicht erfassbar, wenn der vorgegebene Nahbereichs-Schwellenwert ferner für zumindest einen bestimmtes Zeitintervall unterschritten wird. Dadurch kann vorteilhafterweise vermieden werden, dass eine Betätigungsabsicht zufällig oder versehentlich erfasst wird. Beispielsweise kann sich das Betätigungsobjekt dem Bedienelement kurzzeitig annähern, wenn es an dem Bedienelement vorbeigeführt wird.

Es kann zudem vorgesehen sein, dass die Einstellung des Beleuchtungsparameters nur dann erfolgt, wenn eine länger andauernde Annäherung oder ein Schweben in einem bestimmten Bereich ausgeführt wird. Beispielsweise kann ein Nutzer seinen Finger in die Nähe eines Bedienelements bringen oder dieses berühren, ohne es zu betätigen, bevor er entscheidet, welche Betätigung er durchführen will, beziehungsweise während er noch nicht sicher weiß, welchen Bedienbarkeitszustand das Bedienelement aktuell aufweist. In diesem Fall wird nach dem Überschreiten des bestimmten Zeitintervalls die Einstellung des ersten oder zweiten Beleuchtungsparameters vorgenommen und beispielsweise ein aktuell deaktiviertes Bedienelement ausgeblendet.

Bei einer weiteren Ausbildung ist die Steuereinheit dazu eingerichtet, den Beleuchtungsparameter der Beleuchtungseinheit nach dem Erfassen der Betätigungsabsicht für ein bestimmtes *Timeout*-Intervall einzustellen. Insbesondere wird der Beleuchtungsparameter in dieser Zeit auf einen geänderten Parameterwert eingestellt. Dadurch kann vorteilhafterweise sichergestellt werden, dass ein Nutzer erkennen kann, wenn sich der Beleuchtungsparameter verändert.

Insbesondere wird für die Beleuchtung in einem Grundzustand, bei dem keine Betätigungsabsicht erfasst wurde, auf den ersten Beleuchtungsparameter eingestellt und, wenn der zweite Bedienbarkeitszustand erfasst wurde, beim Erfassen einer Betätigungsabsicht wird der zweite Beleuchtungsparameter eingestellt. Nach Ablauf des *Timeout*-Intervalls wird dann wieder der Beleuchtungsparameter wie vor dem Erfassen der Betätigungsabsicht eingestellt.

Das *Timeout*-Intervall kann beispielsweise 1 s bis 5 s betragen, bevorzugt 2 s bis 3 s.

Der Bedienbarkeitszustand des Bedienelements kann auf unterschiedliche Weisen erfasst werden. Zum Beispiel ist dem Bedienelement eine bedienbare Funktionseinheit oder eine bestimmte Funktionalität davon zugeordnet und diese kann den Bedienbarkeitszustand vorgeben, etwa in Abhängigkeit von einem aktuellen Zustand eines Steuerprogramms. Ferner kann der aktivierte Bedienbarkeitszustand erfasst werden, wenn dem Bedienelement eine mittels Betätigung bedienbare Einheit oder Funktionalität zugeordnet ist, und der deaktivierte Bedienbarkeitszustand, wenn keine Einheit durch Betätigen des Bedienelements bedienbar ist.

Alternativ oder zusätzlich können weitere Bedienbarkeitszustände unterschieden werden. Zum Beispiel kann ein dauerhaft und ein temporär deaktivierter oder aktivierter Bedienbarkeitszustand definiert sein. Dabei ist beispielsweise einem Bedienelement eine Funktionalität zugeordnet, die für das Fahrzeug dauerhaft nicht verfügbar ist, etwa weil eine entsprechende Funktionseinheit fehlt oder weil diese nicht aktiviert ist. Zum Beispiel können die Funktionseinheiten verschiedene Fahrerassistenzsysteme repräsentieren, die mittels bestimmter Bedienelemente aktiviert oder bedient werden können. Ist eine solche Funktionseinheit nicht verfügbar, etwa mangels entsprechender Sensoren, Aktoren oder Steuerungsmöglichkeiten, so ist ein entsprechendes Bedienelement funktionslos und in einem dauerhaft deaktivierten Bedienbarkeitszustand. Dagegen kann eine Funktionseinheit temporär ausgeschaltet sein, etwa in einem bestimmten Fahrzustand oder nach einer entsprechenden Eingabe des Nutzers, sodass das Bedienelement nach dem Einschalten der Funktionseinheit wieder verfügbar sein wird; es ist daher lediglich in einem temporär deaktivierten Bedienbarkeitszustand.

Bei einer weiteren Ausbildung umfasst das Bedienelement einen kapazitiven Sensor. Der kapazitive Sensor kann zum Erfassen einer Betätigung und/oder einer Betätigungsabsicht, insbesondere anhand einer Annäherung, genutzt werden. Das Bedienelement kann dadurch vorteilhafterweise besonders gut in eine Oberfläche integriert werden. Derartige Sensoren können ferner Betätigungen mit sehr großer Präzision erfassen und mit geringem Aufwand bedient werden. Bei weiteren Beispielen können andere Sensortypen verwendet werden, etwa resistive oder Temperatursensoren sowie analoge Schalter oder Regler.

Bei einer Ausbildung mit einem kapazitiven Sensor kann das Bedienelement als Schaltfläche in einem bestimmten Erfassungsbereich innerhalb einer glatten Oberfläche ausgebildet sein, das heißt, ohne fühlbar wahrnehmbare Begrenzung des Bedienelements, wie dies etwa bei einem Tastschalter üblich ist.

Die Sensoreinheit kann ferner als eine virtuelle Einheit definiert sein, beispielsweise durch einen bestimmten Erfassungsbereich, in dem eine Betätigung erfasst werden kann, oder für eine bestimmte Bedienhandlung, wobei die Sensoreinheit dann als Einheit zum Erfassen einer Betätigung mittels der Bedienhandlung definiert ist.

Das Erfassen einer Betätigung umfasst insbesondere das Erfassen einer Information, dass eine Betätigungshandlung eines Nutzers mittels des Bedienelements durchgeführt wurde. Es kann ferner eine Information über die erfasste Betätigungshandlung umfassen, beispielsweise wann und an welcher Position die Betätigung erfolgt, welche Dauer die Betätigung hat oder welche Art der Betätigungshandlung durchgeführt wird. Beispiele solcher Betätigungshandlungen sind etwa eine Berührung, ein Antippen für kürzere oder längere Dauer, eine Wischgeste oder eine Annäherung eines Betätigungsobjekts an eine bestimmte Position des Bedienelements.

Bei einer Weiterbildung umfasst das Bediensystem eine mit der Steuereinheit gekoppelte Rückmeldungseinheit zum Ausgeben einer Rückmeldung, wobei die Steuereinheit ferner dazu eingerichtet ist, in Abhängigkeit von dem erfassten Bedienbarkeitszustand des Bedienelements und einer erfassten Betätigung ein erstes oder ein zweites Steuersignal zu erzeugen und an die Rückmeldungseinheit zu übertragen. Dabei ist die Rückmeldungseinheit dazu eingerichtet, die Rückmeldung in Abhängigkeit von dem ersten oder zweiten Steuerungssignal zu erzeugen und auszugeben.

Dem Nutzer können dadurch vorteilhafterweise verschiedene Rückmeldungen ausgegeben werden, je nach dem aktuellen Bedienbarkeitszustand des betätigten Bedienelements. Er kann daher beispielsweise leicht erfassen, ob das betätigte Bedienelement gerade in einem aktivierten oder in einem deaktivierten Bedienbarkeitszustand ist. Im Unterschied zur Veränderung des Beleuchtungsparameters beim Erfassen einer Betätigungsabsicht, kann dieser Aspekt der Erfindung den Nutzer unterstützen, nachdem er bereits eine Betätigung vorgenommen hat, etwa um Verwirrung über ein nicht funktionales, da temporär oder dauerhaft deaktiviertes Bedienelement zu vermeiden.

Die Rückmeldung wird insbesondere unmittelbar anschließend oder bereits während einer Betätigung ausgegeben, sodass der Nutzer direkt erkennen kann, in welchem Bedienbarkeitszustand sich das betätigte Bedienelement befindet. Besonders wenn zwischen einem deaktivierten und einem aktivierten Bedienbarkeitszustand unterschieden wird, kann der Nutzer so erkennen, ob derzeit eine Bedienung mittels des Bedienelements möglich ist. Das heißt, er erfasst durch die Rückmeldung besonders einfach, dass die Betätigung zu keiner Bedienung führen kann und dass eine entsprechende (gegebenenfalls fehlende) Systemreaktion nicht auf einer Fehlfunktion oder Fehlbedienung beruht. Hierdurch kann das Systemvertrauen des Nutzers verbessert werden, da er seine Bedienmöglichkeiten leicht erfassen kann.

Bei einer Weiterbildung ist die Rückmeldungseinheit dazu eingerichtet, die Rückmeldung für einen Nutzer haptisch, akustisch und/oder optisch wahrnehmbar auszugeben. Sie umfasst dazu beispielsweise einen Aktuator, einen Lautsprecher oder ein Display, wobei eine solche Einheit auch für die Ausgabe von Rückmeldungen für mehrere Bedienelemente genutzt werden kann. Der Nutzer kann die Rückmeldung dadurch vorteilhafterweise besonders schnell und direkt erfassen.

Beispielsweise kann die Rückmeldung ein Lichtsignal umfassen, wobei eine Farbe, Intensität, Blinkfrequenz oder ein anderer Lichtparameter des Lichtsignals in Abhängigkeit von dem erfassten Bedienbarkeitszustand ausgebildet ist. Das Lichtsignal kann mit direktem räumlichem Bezug zu einer Position des Bedienelements erzeugt werden, insbesondere in einem Oberflächenbereich, in dem die Betätigung erfassbar ist. Das Lichtsignal kann beispielsweise mittels eines bestimmten Lichtparameters einen aktivierten oder deaktivierten Bedienbarkeitszustand signalisieren und dem Nutzer damit die Wahl des geeigneten Bedienelements erleichtern.

Bei einer Ausbildung umfasst die Rückmeldungseinheit einen piezoelektrischen Aktuator. Dadurch kann vorteilhafterweise eine Vibration besonders einfach und flexibel erzeugt werden und der Aktuator kann in verschiedene Bedienelemente leicht integriert werden. Verschiedene Arten von Vibrationssignalen können besonders einfach erzeugt werden, da lediglich der Verlauf der an das piezoelektrische Element angelegten Spannung variiert werden muss.

Bei einer weiteren Ausbildung umfasst die Rückmeldung eine Vibration, wobei eine Dauer, Frequenz, Amplitude und/oder Signalform der Vibration in Abhängigkeit von dem erfassten Bedienbarkeitszustand ausgebildet ist. Verschiedene mittels Vibration erzeugte Rückmeldungen können sich ferner in einer Signalform unterscheiden, etwa indem ein Sinus-, Dreieck- oder Rechteckverlauf ausgegeben wird. Zudem sind verschiedene Pulsabfolgen denkbar. Dem Nutzer können dadurch vorteilhafterweise verschiedene Rückmeldungen zum Unterscheiden von unterschiedlichen Bedienbarkeitszuständen ausgegeben werden. Die Rückmeldung mittels Vibration ermöglicht es ferner, bei einer Betätigung, die eine Berührung umfasst, einen direkten Bezug zwischen dem Ort der Betätigung und dem Ort der Rückmeldung herzustellen.

Eine Vibration kann insbesondere so ausgegeben werden, dass sie an der Position der Betätigung beziehungsweise des Bedienelements ausgegeben wird. Das heißt, der Nutzer nimmt die Rückmeldung an der Stelle war, an der er beispielsweise eine mit einer Berührung verbundene Betätigung vornimmt. Die Rückmeldung wird dadurch besonders deutlich und direkt mit der Betätigung des Bedienelements verknüpft. Bei weiteren Ausführungen kann die Rückmeldung, die beispielsweise eine Vibration umfasst, an einer von dem Bedienelement beziehungsweise von dem Ort der Betätigung beabstandeten Ort ausgegeben werden. Die kann etwa eine Rückmeldung sein, die mittels einer von dem Bedienelement beabstandet angeordneten Einrichtung ausgegeben wird.

Die Rückmeldung kann verschiedene Elemente umfassen und je nach dem aktuellen Bedienbarkeitszustand des Bedienelements unterschiedlich angepasst werden. Dabei können verschiedene Kombinationen verwendet werden: Die Rückmeldung kann für den ersten Bedienbarkeitszustand lediglich akustisch, visuell oder haptisch wahrnehmbar ausgebildet sein; in diesem Fall kann die für den zweiten Bedienbarkeitszustand ausgegebene Rückmeldung auf veränderte Weise ausgebildet sein oder ganz wegfallen, wobei auch ein Wechsel zwischen auf unterschiedliche Weisen wahrnehmbaren Rückmeldungen denkbar ist. Das heißt, bei dem zweiten Bedienbarkeitszustand kann die Rückmeldung wegfallen, sie kann ebenfalls auf die gleiche Weise wahrnehmbar, aber auf anders ausgebildet sein, oder sie kann auf andere Weise wahrnehmbar ausgebildet sein. Ferner kann die Rückmeldung für den ersten Bedienbarkeitszustand mittels einer Kombination verschiedener Sinne wahrnehmbar sein, etwa mit einer akustisch und einer haptisch erfassbaren Komponente; in diesem Fall kann bei der Rückmeldung für den zweiten Bedienbarkeitszustand zumindest eine der Komponenten wegfallen oder andersartig ausgebildet sein.

Bei einer Ausbildung ist das Bedienelement an einer Lenkvorrichtung des Fahrzeugs angebracht, etwa an einem Lenkrad. Das Bedienelement ist insbesondere in die Lenkvorrichtung integriert. Es ist dadurch vorteilhafterweise besonders leicht für einen Fahrer des Fahrzeugs zugänglich. Das erfindungsgemäße Bediensystem erlaubt in diesem Fall eine vereinfachte Bedienung, ohne dass der Nutzer zu viel Aufmerksamkeit auf das Bedienelement richten muss, da der Bedienbarkeitszustand anhand der Rückmeldung besonders leicht erfassbar ist.

Das erfindungsgemäße Kraftfahrzeug umfasst ein Bediensystem gemäß der obigen Beschreibung, wobei insbesondere das Bedienelement in ein Lenkrad des Fahrzeugs integriert ist. Dabei wird insbesondere die Betätigungsabsicht anhand einer Bewegung einer Hand erfasst, die von einem Lenkradkranz gelöst und in Richtung des in einem mittleren Bereich des Lenkrads angeordneten Bedienelements bewegt wird. Der Nutzer, insbesondere der Fahrer des Fahrzeugs, kann dadurch vorteilhafterweise besonders einfach die gleichen Bedienelemente in verschiedenen Ausstattungsvarianten verwenden, wobei anhand der Rückmeldung die verschiedenen Bedienmöglichkeiten der Bedienelemente leicht erfassbar ausgegeben werden.

Bei dem erfindungsgemäßen Verfahren zum Betreiben eines Bediensystems für ein Fahrzeug umfasst das Bediensystem ein Bedienelement, das einen ersten und einen zweiten Bedienbarkeitszustand aufweist, wobei der erste Bedienbarkeitszustand des Bedienelements ein aktivierter Bedienbarkeitszustand des Bedienelements ist, bei dem in Abhängigkeit von einer Betätigung ein Eingabesignal erzeugt, an eine bedienbare Funktionseinheit übertragen und eine Eingabe vorgenommen wird, und der zweite Bedienbarkeitszustand des Bedienelements ein deaktivierter Bedienbarkeitszustand des Bedienelements ist, bei dem das Betätigen des Bedienelements zu keiner Bedienung der Funktionseinheit führt, wobei in Abhängigkeit von einem aktuellen Zustand der bedienbaren Funktionseinheit, beziehungsweise eines sie steuernden Steuerungsprogramms, das Bedienelement im aktivierten Bedienbarkeitszustand aktuell für eine Eingabe nutzbar ist oder im deaktivierten Bedienbarkeitszustand für eine Eingabe nicht nutzbar ist, und eine Beleuchtungseinheit zum Beleuchten des Bedienelements mit einem ersten oder einem zweiten Beleuchtungsparameter. Bei dem Verfahren werden der Bedienbarkeitszustand des Bedienelements sowie eine Betätigungsabsicht erfasst, wobei die Betätigungsabsicht anhand einer Annäherung eines Betätigungsobjekts an das Bedienelement erfasst wird, wobei die Annäherung erfasst wird, wenn ein Abstand zwischen dem Betätigungsobjekt und dem Bedienelement einen vorgegebenen Nahbereichs-Schwellenwert unterschreitet, und in Abhängigkeit von dem erfassten Bedienbarkeitszustand und in Abhängigkeit von der erfassten Betätigungsabsicht wird der erste oder der zweite Beleuchtungsparameter eingestellt, wobei nach dem Erfassen der Betätigungsabsicht der erste Beleuchtungsparameter eingestellt wird, wenn für das Bedienelement der erste Bedienbarkeitszustand erfasst wurde, und der zweite Beleuchtungsparameter eingestellt wird, wenn für das Bedienelement der zweite Bedienbarkeitszustand erfasst wurde.

Das erfindungsgemäße Verfahren ist insbesondere ausgebildet, das vorstehend beschriebene erfindungsgemäße Bediensystem zu implementieren. Das Verfahren weist somit dieselben Vorteile auf wie das erfindungsgemäße Bediensystem.

Die Erfindung wird nun anhand von Ausführungsbeispielen mit Bezug zu den Zeichnungen erläutert.
- Figur 1: zeigt ein Ausführungsbeispiel des erfindungsgemäßen Bediensystems in einem Fahrzeug,
- Figur 2: zeigt ein Ausführungsbeispiel einer Lenkvorrichtung mit dem erfindungsgemäßen Bediensystem und
- Figur 3: zeigt ein Ausführungsbeispiel des erfindungsgemäßen Verfahrens.

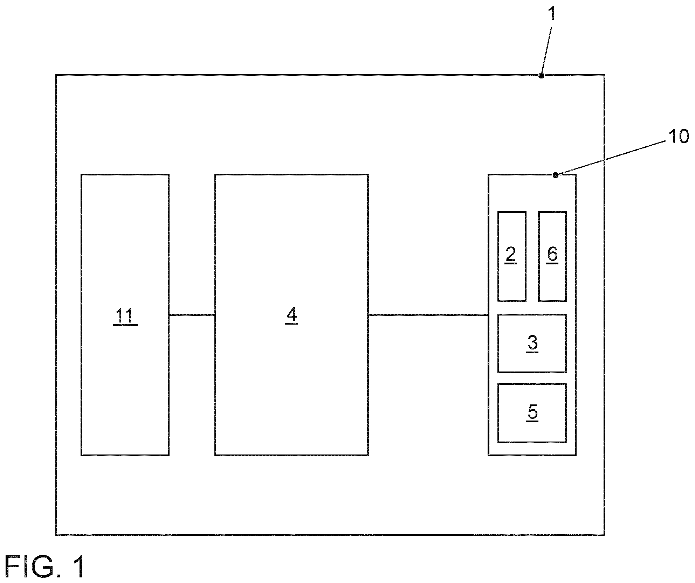

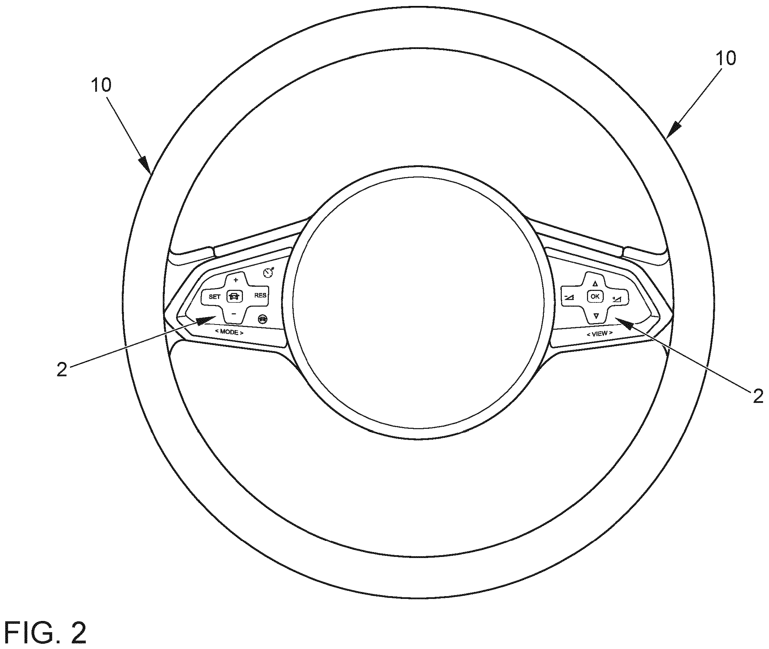

Mit Bezug zu den Figuren 1 und 2 wird ein Ausführungsbeispiel des erfindungsgemäßen Bediensystems in einem Fahrzeug erläutert.

Das Fahrzeug 1 umfasst eine Lenkvorrichtung 10, die wiederum ein Bedienelement 2, eine Rückmeldungseinheit 3, eine Annäherungserfassungseinheit 5 und eine Beleuchtungseinheit 6 umfasst. Die Lenkvorrichtung 10 ist mit einer Steuereinheit 4 gekoppelt. Mit der Steuereinheit 4 ist ferner eine Funktionseinheit 11 gekoppelt.

Bei dem Ausführungsbeispiel ist die Lenkvorrichtung 10 als Lenkrad 10 ausgebildet, in dem das Bedienelement 2 integriert ist. Das Bedienelement 2 ist auf an sich bekannte Weise ausgebildet und umfasst bei dem Ausführungsbeispiel einen kapazitiven Sensor, dem ein bestimmter Erfassungsbereich zugeordnet ist. Innerhalb dieses Erfassungsbereichs, der hier an der Oberfläche des Lenkrads 10 ausgebildet ist, wird eine Berührung mit einem Betätigungsobjekt, etwa einem Finger eines Nutzers, als Betätigung detektiert und es wird ein Betätigungssignal erzeugt und an die Steuereinheit 4 übertragen.

Bei dem Ausführungsbeispiel umfasst das Lenkrad 10, wie in Figur 2 gezeigt, eine Vielzahl separat ausgebildeter Bedienelemente 2, denen jeweils zumindest ein kapazitiver Sensor und ein Oberflächenbereich auf dem Lenkrad 10 zugeordnet ist. Diese sind auf an sich bekannte Weise rechts und links neben einem mittleren Bereich des Lenkrads 10 gruppiert und bilden kreuzförmig angeordnete Tasten sowie weitere Tasten. Bei dem Ausführungsbeispiel ist die Oberfläche des Lenkrads 10 im Bereich der Bedienelemente 2 so strukturiert, dass die Ränder der den einzelnen Bedienelementen 2 zugeordneten flächigen Erfassungsbereiche für einen Nutzer mit dem Finger fühlbar sind. Bei einem weiteren Ausführungsbeispiel sind den Bedienelementen 2 nicht jeweils eigene kapazitive Sensoren zugeordnet, sondern die für ein Bedienelement 2 definierten Erfassungsbereiche werden auf andere Weise gebildet, etwa indem die Position einer Berührung der Oberfläche mittels eines anderen Sensors detektiert und dem Erfassungsbereich eines Bedienelements 2 zugeordnet wird; die Bedienelemente 2 können in diesem Fall virtuell anhand von Teilbereichen eines größeren Erfassungsbereichs ausgebildet sein.

Bei dem Ausführungsbeispiel ist vorgesehen, dass die Bedienelemente 2 des Lenkrads 10 dauerhaft sichtbar sind, insbesondere indem Symbole auf der Oberfläche im jeweils zugeordneten Erfassungsbereich angeordnet sind, etwa aufgedruckt. Bei weiteren Beispielen sind die Bedienelemente 2 nur bei eingeschaltetem Bediensystem sichtbar, etwa nach dem Starten des Fahrzeugs 1, beispielsweise indem die Symbole durch eine Black-Panel-Technik nur dann sichtbar von der umgebenden Oberfläche unterscheidbar sind, wenn sie hinterleuchtet werden.

Bei einem weiteren Ausführungsbeispiel sind die Bedienelemente 2 auf andere Weise ausgebildet, etwa als resistive Schalter, als Tastschalter, bei denen durch Beaufschlagen mit äußerem Druck ein elektrischer Kontakt geöffnet oder geschlossen wird, als Schiebe- oder Drehregler. Ferner kann die Oberfläche im Bereich der Bedienelemente 2 auf verschiedene Weisen strukturiert oder völlig glatt ausgebildet sein.

Die Rückmeldungseinheit 3 ist ebenfalls in der Lenkvorrichtung 10 integriert und umfasst bei diesem Beispiel einen Piezo-Aktuator. Dieser reagiert auf das Anlegen einer elektrischen Spannung mit einer mechanischen Verformung so, dass eine Wechselspannung zu einer Vibration führt. Die Rückmeldungseinheit 3 ist so angeordnet, dass eine mittels des Piezo-Aktuators erzeugte Vibration mechanisch durch eine Berührung der Oberfläche des Lenkrads 10 in dem einem Bedienelement 2 zugeordneten Erfassungsbereich wahrnehmbar ist. Mittels dieser Vibration werden bei dem Ausführungsbeispiel Rückmeldungen ausgegeben. Bei weiteren Ausführungsbeispielen kann die Rückmeldungseinheit 3 alternativ oder zusätzlich eine akustisch oder optisch wahrnehmbare Rückmeldung ausgeben.

Die Annäherungserfassungseinheit 5 umfasst bei dem Beispiel einen kapazitiven Sensor, der ein Eintreten eines Betätigungsobjekts, insbesondere der Fingers des Nutzers, in einen Bereich im Umfeld eines Bedienelements 2 sowie eine Annäherung an dieses erfasst. Bei dem Ausführungsbeispiel wird eine Annäherung eines Betätigungsobjekts detektiert, wenn dessen Abstand zu dem Erfassungsbereich 5 cm, bevorzugt 3 cm, unterschreitet, und eine Betätigung wird erfasst, wenn das Betätigungsobjekt die Oberfläche im Erfassungsbereich berührt. Die Annäherung kann bei einem weiteren Ausführungsbeispiel auf andere Weise detektiert werden.

Die Beleuchtungseinheit 6 umfasst eine Leuchtdiode, die hier so ausgebildet ist, dass sie je nach Ansteuerung die Oberfläche des Lenkrads 10 im Erfassungsbereich des Bedienelements 2 mit Licht einer bestimmten Intensität und/oder Farbe beleuchtet. Dabei sind für die Beleuchtung ein erster und ein zweiter Beleuchtungsparameter definiert: Wenn der erste Beleuchtungsparameter für die Beleuchtungseinheit 6 eingestellt ist, wird das Bedienelement 2 mit einer bestimmten Intensität und Farbe beleuchtet. Ist dagegen der zweite Beleuchtungsparameter eingestellt, so ist die Beleuchtung ausgeschaltet. Bei weiteren Ausführungsbeispielen sind andere Beleuchtungsparameter denkbar, die zudem unterschiedliche Aspekte der mittels der Beleuchtungseinheit 6 erzeugten Lichtemission betreffen können, etwa eine Lichtfarbe.

Die Beleuchtungseinheit 6 kann durch Einstellen des Beleuchtungsparameters ferner so angesteuert werden, dass eine dynamische Beleuchtung erzeugt wird, etwa mit einer zeitlich veränderlichen Intensität, einem Blinken oder einem Lauflicht oder einer anderen Animation, bei der sich die Lichtemission mehrerer Lichtquellen der Beleuchtungseinheit 6 oder mehrerer Beleuchtungseinheiten 6 verändern.

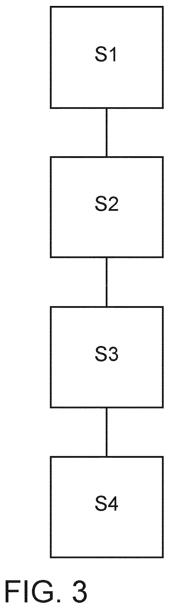

Mit Bezug zu Figur 3 wird ein Ausführungsbeispiel des erfindungsgemäßen Verfahrens erläutert. Dabei wird von dem oben erläuterten Ausführungsbeispiel ausgegangen, welches im Folgenden zudem weiter spezifiziert wird.

Bei dem Verfahren wird in einem ersten Schritt S1 eine Annäherung eines Fingers eines Nutzers an eines der Bedienelemente 2 als Betätigungsabsicht erfasst. Das heißt, der Abstand zwischen dem Finger und dem Bedienelement 2 auf dem Lenkrad 10 unterschreitet einen bestimmten, vorbestimmten Nahbereichs-Schwellenwert. Dieser liegt bei dem Ausführungsbeispiel bei 2 cm, er kann jedoch auch anders ausgebildet sein und etwa zwischen 1 cm und 5 cm oder zwischen 2 cm und 3 cm liegen. Um zu vermeiden, dass eine Betätigungsabsicht bereits dann erfasst wird, wenn der Nutzer den Finger nur zufällig nah an dem Bedienelement 2 vorbeiführt, wird die Betätigungsabsicht erst dann erfasst, wenn der Finger den Nahbereichs-Schwellenwert für zumindest 100 ms unterschreitet. Andere Schwellenwerte für diese Zeit können ebenso definiert sein, etwa zumindest 50 ms, 200 ms, 1 s oder Werte zwischen 50 ms und 2 s.

Bei einem weiteren Ausführungsbeispiel wird eine Annäherung nur dann als Betätigungsabsicht erfasst, wenn sich der Finger in eine Richtung auf das Bedienelement 2 zu bewegt, nicht beispielsweise schräg davon weg.

Bei dem Ausführungsbeispiel ist dem Bedienelement 2 die bedienbare Funktionseinheit 11 zugeordnet, das heißt, anhand einer Betätigung des Bedienelements 2 kann die Steuereinheit 4 ein Eingabesignal erzeugen und an die Funktionseinheit 11 übertragen, welche hierdurch bedient wird. Die Funktionseinheit 11 wird durch ein elektronisches Steuerungsprogramm gesteuert, dessen Zustand anhand des Eingabesignals im Sinne einer Bedienhandlung verändert werden kann. Bei dem Ausführungsbeispiel umfasst die Funktionseinheit 11 ein Fahrerassistenzsystem, es können aber alternativ oder zusätzlich andere Systeme und Einrichtungen, etwa ein Navigations- oder Multimediasystem, umfasst sein.

In Abhängigkeit von einem aktuellen Zustand der bedienbaren Funktionseinheit 11 beziehungsweise des sie steuernden Steuerungsprogramms kann das Bedienelement 2 aktuell für eine Eingabe genutzt werden (aktivierter Bedienbarkeitszustand) oder nicht (deaktivierter Bedienbarkeitszustand). Das heißt, im deaktivierten Bedienbarkeitszustand führt ein Betätigen des Bedienelements 2 zu keiner Bedienung der Funktionseinheit 11, die Betätigung wird also nicht als Bedienhandlung interpretiert. In einem Schritt S2 erfasst die Steuereinheit 4 den aktuellen Bedienbarkeitszustand des Bedienelements 2. Insbesondere kann die Steuereinheit 4 diese Information von der Funktionseinheit 11 empfangen oder aus einem Speicher auslesen.

In Abhängigkeit von dem Bedienbarkeitszustand wird, nachdem die Betätigungsabsicht erfasst wurde, die Beleuchtungseinheit 6 angesteuert und der Beleuchtungsparameter eingestellt. Bei dem Ausführungsbeispiel ist in einem Grundzustand ohne Annäherung der erste Beleuchtungsparameter eingestellt und das Bedienelement wird - unabhängig von seinem Bedienbarkeitszustand - mit einer bestimmten Intensität und Farbe beleuchtet. Wird dieser Grundzustand verlassen, das heißt, wenn eine Betätigungsabsicht erfasst wird, dann erfolgt die Einstellung abhängig von aktuellen Bedienbarkeitszustand: Befindet sich das Bedienelement 2 im aktivierten Bedienbarkeitszustand, so bleibt seine Beleuchtung unverändert; befindet es sich jedoch im deaktivierten Bedienbarkeitszustand, so wird der zweite Beleuchtungszustand eingestellt, sodass im vorliegenden Fall die Beleuchtung ausgeschaltet wird und das Bedienelement 2 schlechter oder nicht mehr sichtbar ist (*Black-Panel-*Effekt).

Bei weiteren Ausführungsbeispielen sind andere Kombinationen verschiedener Intensitäten, Farben oder dynamischer Effekte für den ersten und zweiten Beleuchtungsparameter vorgesehen. So kann beispielsweise ein Blinken oder Pulsieren der Beleuchtung für den ersten und/oder zweiten Beleuchtungsparameter implementiert werden. Ferner kann das Bedienelement 2 im aktivierten Zustand nach Erfassung einer Betätigungsabsicht hervorgehoben werden, etwa durch eine erhöhte Intensität.

Bei dem Ausführungsbeispiel ist vorgesehen, dass der erste oder zweite Beleuchtungsparameter so lange eingestellt bleibt, wie eine Betätigungsabsicht vorliegt; erst anschließend, wenn keine Betätigungsabsicht mehr erfasst wird, kehrt die Beleuchtungseinheit 6 zum Grundzustand zurück. Bei weiteren Ausführungsbeispielen kann ein Timeout-Intervall definiert sein, wobei der erste oder zweite Beleuchtungsparameter nur während dieser Zeitspanne nach dem Erfassen der Betätigungsabsicht eingestellt und anschließend wieder der Grundzustand erreicht wird. Zum Beispiel werden bei längerem Schweben des Fingers über den Bedienelementen 2 zunächst die deaktivierten Bedienelemente 2 ausgeblendet, sie erscheinen jedoch wieder nach Ablauf des *Timeout*-Intervalls.

Bei einem weiteren Ausführungsbeispiel werden Symbole, die mittels der Beleuchtungseinheit 6 im Bereich der Bedienelements 2 angezeigt werden, ausgeblendet, wenn eine Annäherung an ein deaktiviertes Bedienelement 2 erfasst wird; in diesem Fall werden nach der Annäherung lediglich noch diejenigen Symbole angezeigt, die Bedienelementen 2 zugeordnet sind, die sich aktuell in einem aktivierten Bedienbarkeitszustand befinden. Ferner können andere Arten der Rückmeldung bei einer Annäherung ausgegeben werden, etwa eine besondere Hervorhebung von Bedienelementen 2 in einem aktivierten Bedienbarkeitszustand.

In einem weiteren Schritt S3 wird eine Betätigung des Bedienelements 2 erfasst, das heißt in diesem Fall eine Berührung auf der Oberfläche des Lenkrads 10 in dem zugeordneten Erfassungsbereich. Das Bedienelement 2 erzeugt ein Betätigungssignal, das nachfolgend an die Steuereinheit 4 übertragen wird. Anhand des Betätigungssignals bestimmt die Steuereinheit 4, welches Bedienelement 2 betätigt wurde.

Bei weiteren Ausführungsbeispielen wird anhand des Betätigungssignals ferner eine bestimmte Art der Betätigung bestimmt. So kann die Betätigung etwa mittels einer Tippgeste erfolgen, bei der eine bestimmte Position für eine bestimmte Zeit berührt wird, wobei beispielsweise zwischen einem kurzen (*Shortpress*) und einem langen Antippen (*Longpress*) unterschieden wird. Ferner kann eine Wischgeste erfasst werden, die eine Bewegung entlang einer Trajektorie von einer bestimmten Startposition zu einer bestimmten Endposition umfasst.

Die Steuereinheit 4 erzeugt ein Steuersignal, anhand dessen in einem Schritt S4 die Rückmeldungseinheit 6 eine Rückmeldung erzeugt und ausgibt. Bei dem Ausführungsbeispiel werden unterschiedliche Steuersignale - und entsprechend unterschiedliche Rückmeldungen - erzeugt je nachdem, welcher Bedienbarkeitszustand für das Bedienelement 2 erfasst wurde: Befindet sich das Bedienelement 2 im aktivierten Bedienbarkeitszustand, so wird eine erste Rückmeldung erzeugt, befindet es sich im deaktivierten Bedienbarkeitszustand, so wird eine davon verschiedene, zweite Rückmeldung erzeugt. Die Rückmeldung wird direkt nach dem Erfassen der Betätigung so ausgegeben, dass sie mit dem Finger des Nutzers haptisch wahrgenommen werden kann. Die Ausgabe erfolgt daher insbesondere während ein Kontakt zwischen dem Finger und der Oberfläche des Lenkrads 10 im Erfassungsbereich besteht.

Die ausgegebenen Rückmeldungen unterscheiden sich bei diesem Beispiel in der Frequenz und Dauer einer Vibration: Als Rückmeldung für das Betätigen eines Bedienelements im aktivierten Bedienbarkeitszustand wird eine verhältnismäßig kurze und hochfrequente Vibration ausgegeben, während die Vibration bei dem deaktivierten Bedienbarkeitszustand längere Zeit andauert und eine geringere Frequenz aufweist. Als weiterer Parameter können sich die Rückmeldungen in einer Amplitude oder einer Abfolge mehrerer Vibrationssignale unterscheiden.

Bei weiteren Ausführungsbeispielen kann die Rückmeldung haptisch, akustisch und/oder optisch wahrnehmbar ausgegeben werden. Eine akustisch wahrnehmbare Rückmeldung kann beispielsweise mit einer bestimmten Länge, Frequenz, Dauer, Signalabfolge oder mit einem bestimmten Informationsgehalt, insbesondere sprachlicher Information, gebildet werden, wobei sich verschiedene Rückmeldungen für verschiedene Bedienbarkeitszustände in diesen Parametern unterscheiden können. Eine optisch wahrnehmbare Rückmeldung kann etwa eine bestimmte Lichtemission der Beleuchtungseinheit 6 umfassen, etwa mit einer bestimmten Intensität, Farbe oder Verteilung, insbesondere mit einem grafischen Symbol, oder einer sich dynamisch verändernden Lichtemission. Ferner kann eine optisch wahrnehmbare Rückmeldung von dem Bedienelement 2 beabstandet ausgegeben werden, etwa mittels einer Ausgabeeinheit wie einem Display oder einer Sichtfeldanzeige; zum Beispiel kann ein Popup erzeugt werden, das auf den aktuellen Bedienbarkeitszustand hinweist, insbesondere auf den deaktivierten Bedienbarkeitszustand.

Bei weiteren Ausführungsbeispielen sind alternativ oder zusätzlich andere Bedienbarkeitszustände definiert. Beispielsweise kann danach unterschieden werden, ob ein Bedienelement 2 temporär oder dauernd in einem deaktivierten Zustand ist. So kann etwa eine bestimmte Funktionalität in dem Fahrzeug 1 dauerhaft nicht verfügbar und das entsprechende Bedienelement 2 daher ständig deaktiviert sein. Eine Funktionalität oder die Bedienung mittels des Bedienelements 2 kann ferner temporär deaktiviert sein, etwa durch eine entsprechende Eingabe eines Nutzers. In diesem Fällen können der erste und/oder zweite Beleuchtungsparameter unterschiedlich ausgebildet sein. Zum Beispiel können beim Erfassen einer Betätigungsabsicht die ständig deaktivierten Bedienelemente 2 vollständig ausgeblendet werden, während die Beleuchtung der temporär deaktivierten Bedienelemente nur schwächer erfolgt. Ferner können unterschiedliche Rückmeldungen beim Betätigen des Bedienelements 2 ausgegeben werden, etwa um den Nutzer darauf hinzuweisen, dass eine Bedienmöglichkeit aktuell deaktiviert ist, die gegebenenfalls durch einen Bezahldienst oder auf andere Weise aktiviert werden kann.

Bei weiteren Ausführungsbeispielen kann bereits eine Annäherung an das Bedienelement 2 als Betätigung interpretiert werden. In diesem Fall kann eine Rückmeldung ausgegeben werden, die insbesondere in Abhängigkeit von dem Bedienbarkeitszustand des Bedienelements 2 gebildet wird. Das heißt, zum Betätigen muss der Finger lediglich einen bestimmten Abstand zu dem Bedienelement 2 unterschreiten.

### Bezugszeichenliste

- 1: Fahrzeug
- 2: Bedienelement
- 3: Rückmeldungseinheit
- 4: Steuereinheit
- 5: Erfassungseinheit; Annäherungserfassungseinheit
- 6: Beleuchtungseinheit
- 10: Lenkvorrichtung; Lenkrad
- 11: Funktionseinheit
- S1 bis S4: Schritt

## Patentansprüche

1. Bediensystem für ein Fahrzeug (1), umfassend
ein Bedienelement (2), welches einen ersten und einen zweiten Bedienbarkeitszustand aufweist, wobei der erste Bedienbarkeitszustand des Bedienelements (2) ein aktivierter Bedienbarkeitszustand des Bedienelements (2) ist, bei dem in Abhängigkeit von einer Betätigung ein Eingabesignal erzeugt, an eine bedienbare Funktionseinheit (11) übertragen und eine Eingabe vorgenommen wird, und der zweite Bedienbarkeitszustand des Bedienelements (2) ein deaktivierter Bedienbarkeitszustand des Bedienelements (2) ist, bei dem das Betätigen des Bedienelements (2) zu keiner Bedienung der Funktionseinheit (11) führt, wobei in Abhängigkeit von einem aktuellen Zustand der bedienbaren Funktionseinheit (11), beziehungsweise eines sie steuernden Steuerungsprogramms, das Bedienelement (2) im aktivierten Bedienbarkeitszustand aktuell für eine Eingabe nutzbar ist oder im deaktivierten Bedienbarkeitszustand für eine Eingabe nicht nutzbar ist;
eine Beleuchtungseinheit (6) zum Beleuchten des Bedienelements (2) mit einem ersten oder einem zweiten Beleuchtungsparameter;
eine Erfassungseinheit (5) zum Erfassen einer Betätigungsabsicht und des Bedienbarkeitszustands des Bedienelements (2),
wobei die Erfassungseinheit (5) dazu eingerichtet ist, die Betätigungsabsicht anhand einer Annäherung eines Betätigungsobjekts an das Bedienelement (2) zu erfassen, wobei die Annäherung erfassbar ist, wenn ein Abstand zwischen dem Betätigungsobjekt und dem Bedienelement (2) einen vorgegebenen Nahbereichs-Schwellenwert unterschreitet; und
eine mit dem Bedienelement (2), der Beleuchtungseinheit (6) und der Erfassungseinheit (5) gekoppelte Steuereinheit (4); wobei
die Steuereinheit (4) dazu eingerichtet ist, in Abhängigkeit von dem erfassten Bedienbarkeitszustand und in Abhängigkeit von der erfassten Betätigungsabsicht den ersten oder zweiten Beleuchtungsparameter der Beleuchtungseinheit (6) einzustellen, wobei nach dem Erfassen der Betätigungsabsicht der erste Beleuchtungsparameter eingestellt wird, wenn für das Bedienelement (2) der erste Bedienbarkeitszustand erfasst wurde, und der zweite Beleuchtungsparameter eingestellt wird, wenn für das Bedienelement (2) der zweite Bedienbarkeitszustand erfasst wurde.

2. Bediensystem gemäß Anspruch 1,
**dadurch gekennzeichnet, dass**
der erste Beleuchtungsparameter so ausgebildet ist, dass das Bedienelement (2) mit einer helleren Intensität beleuchtet wird als bei dem zweiten Beleuchtungsparameter.

3. Bediensystem gemäß Anspruch 1,
**dadurch gekennzeichnet, dass**
die Betätigungsabsicht erfassbar ist, wenn der vorgegebene Nahbereichs-Schwellenwert ferner für zumindest einen bestimmtes Zeitintervall unterschritten wird.

4. Bediensystem gemäß einem der vorhergehenden Ansprüche,
**dadurch gekennzeichnet, dass**
die Steuereinheit (4) dazu eingerichtet ist, den Beleuchtungsparameter der Beleuchtungseinheit (6) nach dem Erfassen der Betätigungsabsicht für ein bestimmtes *Timeout*-Intervall einzustellen.

5. Bediensystem gemäß einem der vorhergehenden Ansprüche,
**dadurch gekennzeichnet, dass**
das Bedienelement (2) einen kapazitiven Sensor umfasst.

6. Bediensystem gemäß einem der vorhergehenden Ansprüche,
**gekennzeichnet durch**
eine mit der Steuereinheit (4) gekoppelte Rückmeldungseinheit (3) zum Ausgeben einer Rückmeldung; wobei
die Steuereinheit (4) ferner dazu eingerichtet ist, in Abhängigkeit von dem erfassten Bedienbarkeitszustand des Bedienelements (2) und einer erfassten Betätigung ein erstes oder ein zweites Steuersignal zu erzeugen und an die Rückmeldungseinheit (3) zu übertragen; wobei
die Rückmeldungseinheit (3) dazu eingerichtet ist, die Rückmeldung in Abhängigkeit von dem ersten oder zweiten Steuerungssignal zu erzeugen und auszugeben.

7. Bediensystem gemäß einem der vorhergehenden Ansprüche,
**dadurch gekennzeichnet, dass**
das Bedienelement (2) an einer Lenkvorrichtung (10) des Fahrzeugs (1) angebracht ist.

8. Verfahren zum Betreiben eines Bediensystems für ein Fahrzeug (1) mit einem Bedienelement (2), das einen ersten und einen zweiten Bedienbarkeitszustand aufweist, wobei der erste Bedienbarkeitszustand des Bedienelements (2) ein aktivierter Bedienbarkeitszustand des Bedienelements ist, bei dem in Abhängigkeit von einer Betätigung ein Eingabesignal erzeugt, an eine bedienbare Funktionseinheit übertragen und eine Eingabe vorgenommen wird, und der zweite Bedienbarkeitszustand des Bedienelements (2) ein deaktivierter Bedienbarkeitszustand des Bedienelements (2) ist, bei dem das Betätigen des Bedienelements (2) zu keiner Bedienung der Funktionseinheit führt, wobei in Abhängigkeit von einem aktuellen Zustand der bedienbaren Funktionseinheit (11), beziehungsweise eines sie steuernden Steuerungsprogramms, das Bedienelement (2) im aktivierten Bedienbarkeitszustand aktuell für eine Eingabe nutzbar ist oder im deaktivierten Bedienbarkeitszustand für eine Eingabe nicht nutzbar ist, und einer Beleuchtungseinheit (6) zum Beleuchten des Bedienelements (2) mit einem ersten oder einem zweiten Beleuchtungsparameter; wobei bei dem Verfahren,
der Bedienbarkeitszustand des Bedienelements (2) sowie eine Betätigungsabsicht erfasst werden, wobei die Betätigungsabsicht anhand einer Annäherung eines Betätigungsobjekts an das Bedienelement (2) erfasst wird, wobei die Annäherung erfasst wird, wenn ein Abstand zwischen dem Betätigungsobjekt und dem Bedienelement (2) einen vorgegebenen Nahbereichs-Schwellenwert unterschreitet; und
in Abhängigkeit von dem erfassten Bedienbarkeitszustand und in Abhängigkeit von der erfassten Betätigungsabsicht der erste oder der zweite Beleuchtungsparameter eingestellt wird, wobei nach dem Erfassen der Betätigungsabsicht der erste Beleuchtungsparameter eingestellt wird, wenn für das Bedienelement (2) der erste Bedienbarkeitszustand erfasst wurde, und der zweite Beleuchtungsparameter eingestellt wird, wenn für das Bedienelement (2) der zweite Bedienbarkeitszustand erfasst wurde.

## Claims

1. Operating system for a vehicle (1), comprising
an operating element (2) which has a first and a second operability state, wherein the first operability state of the operating element (2) is an activated operability state of the operating element (2) in which, depending on an actuation, an input signal is generated, transmitted to an operable functional unit (11), and an input is made, and the second operability state of the operating element (2) is a deactivated operability state of the operating element (2) in which actuation of the operating element (2) does not lead to operation of the functional unit (11), wherein, depending on a current state of the operable functional unit (11) or of a control program controlling said unit, in the activated operability state, the operating element (2) can currently be used for an input or, in the deactivated operability state, cannot be currently used for an input;
a lighting unit (6) for illuminating the operating element (2) with a first or a second lighting parameter;
a detection unit (5) for detecting an actuation intention and the operability state of the operating element (2),
wherein the detection unit (5) is configured to detect the actuation intention based on an approach of an actuating object to the operating element (2), wherein the approach can be detected if a distance between the actuating object and the operating element (2) is below a predetermined proximity threshold value; and
a control unit (4) coupled to the operating element (2), the lighting unit (6) and the detection unit (5); wherein
the control unit (4) is configured to set the first or the second lighting parameter of the lighting unit (6) depending on the detected operability state and depending on the detected actuation intention, wherein, after the actuation intention has been detected, the first lighting parameter is set if the first operability state has been detected for the operating element (2), and the second lighting parameter is set if the second operability state has been detected for the operating element (2).

2. Operating system according to claim 1,
**characterized in that**
the first lighting parameter is designed such that the operating element (2) is illuminated with a brighter intensity than with the second lighting parameter.

3. Operating system according to claim 1,
**characterized in that**
the actuation intention can be detected if the predetermined proximity threshold value is also undershot for at least a specific time interval.

4. Operating system according to any of the preceding claims,
**characterized in that**
the control unit (4) is configured to set the lighting parameter of the lighting unit (6) after detecting the actuation intention for a specific *timeout*-interval.

5. Operating system according to any of the preceding claims,
**characterized in that**
the operating element (2) comprises a capacitive sensor.

6. Operating system according to any of the preceding claims,
**characterized by**
a feedback unit (3) for outputting feedback, which is coupled to the control unit (4);
the control unit (4) being further configured, depending on the detected operability state of the operating element (2) and a detected actuation, to generate a first or a second control signal and to transmit said signal to the feedback unit (3);
the feedback unit (3) being configured to generate and output the feedback depending on the first or the second control signal.

7. Operating system according to any of the preceding claims,
**characterized in that**
the control element (2) is attached to a steering device (10) of the vehicle (1).

8. Method for operating an operating system for a vehicle (1), said system comprising an operating element (2) which has a first and a second operability state, wherein the first operability state of the operating element (2) is an activated operability state of the operating element in which, depending on an actuation, an input signal is generated, transmitted to an operable functional unit, and an input is made, and the second operability state of the operating element (2) is a deactivated operability state of the operating element (2) in which actuation of the operating element (2) does not lead to operation of the functional unit, wherein, depending on a current state of the operable functional unit (11) or of a control program controlling said unit, in the activated operability state, the operating element (2) can currently be used for an input or, in the deactivated operability state, cannot be used for an input, and a lighting unit (6) for illuminating the operating element (2) with a first or a second lighting parameter; wherein, in the method,
the operability state of the operating element (2) and an actuation intention are detected, wherein the actuation intention is detected based on an approach of an actuating object to the operating element (2), wherein the approach is detected if a distance between the actuating object and the operating element (2) is below a predetermined proximity threshold value; and
the first or the second lighting parameter is set depending on the detected operability state and depending on the detected actuation intention, wherein, after the actuation intention has been detected, the first lighting parameter is set if the first operability state has been detected for the operating element (2), and the second lighting parameter is set if the second operability state has been detected for the operating element (2).

## Revendications

1. Système de commande pour un véhicule (1), comprenant
un élément de commande (2), qui présente un premier et un second état de manœuvre, dans lequel le premier état de manœuvre de l'élément de commande (2) est un état de manœuvre activé de l'élément de commande (2), dans lequel, en fonction d'un actionnement, un signal d'entrée est généré, transmis à une unité fonctionnelle manœuvrable (11) et une entrée est effectuée, et le second état de manœuvre de l'élément de commande (2) est un état de manœuvre désactivé de l'élément de commande (2), dans lequel l'actionnement de l'élément de commande (2) ne conduit à aucune commande de l'unité fonctionnelle (11), dans lequel l'élément de commande (2) est actuellement utilisable pour une entrée dans l'état de manœuvre activé ou n'est pas utilisable pour une entrée dans l'état de manœuvre désactivé, en fonction d'un état actuel de l'unité fonctionnelle (11) manœuvrable, respectivement d'un programme de contrôle qui la contrôle ;
une unité d'éclairage (6) pour éclairer l'élément de commande (2) avec un premier ou un second paramètre d'éclairage ;
une unité de détection (5) pour détecter une intention d'actionnement et l'état de manœuvre de l'élément de commande (2),
dans lequel l'unité de détection (5) est conçue pour détecter l'intention d'actionnement à l'aide d'un rapprochement d'un objet d'actionnement vers l'élément de commande (2), dans lequel le rapprochement peu être détecté lorsqu'une distance entre l'objet d'actionnement et l'élément de commande (2) est inférieure à une valeur seuil de proximité prédéfinie ; et
une unité de contrôle (4) couplée à l'élément de commande (2), à l'unité d'éclairage (6) et à l'unité de détection (5) ; dans lequel
l'unité de contrôle (4) est conçue pour régler le premier ou le second paramètre d'éclairage de l'unité d'éclairage (6) en fonction de l'état de manœuvre détecté et en fonction de l'intention d'actionnement détectée, dans lequel le premier paramètre d'éclairage est réglé après la détection de l'intention d'actionnement lorsque le premier état de manœuvre a été détecté pour l'élément de commande (2), et le second paramètre d'éclairage est réglé lorsque le second état de manœuvre a été détecté pour l'élément de commande (2).

2. Système de commande selon la revendication 1,
**caractérisé en ce que**
le premier paramètre d'éclairage est conçu de telle sorte que l'élément de commande (2) est éclairé avec une intensité plus claire que pour le second paramètre d'éclairage.

3. Système de commande selon la revendication 1,
**caractérisé en ce que**
l'intention d'actionnement peut être détectée lorsqu'en outre la valeur seuil de proximité prédéfinie n'est pas atteinte pendant au moins un intervalle de temps déterminé.

4. Système de commande selon l'une des revendications précédentes,
**caractérisé en ce que**
l'unité de contrôle (4) est conçue pour régler le paramètre d'éclairage de l'unité d'éclairage (6) après la détection de l'intention d'actionnement pour un intervalle de *temporisation* déterminé.

5. Système de commande selon l'une des revendications précédentes,
**caractérisé en ce que**
l'élément de commande (2) comprend un capteur capacitif.

6. Système de commande selon l'une des revendications précédentes,
**caractérisé par**
une unité de rétroaction (3) couplée à l'unité de contrôle (4) pour délivrer une rétroaction ; dans lequel
l'unité de contrôle (4) est en outre conçue pour générer et transmettre à l'unité de rétroaction (3) un premier ou un second signal de contrôle en fonction de l'état de manœuvre détecté de l'élément de commande (2) et d'un actionnement détecté ; dans lequel
l'unité de rétroaction (3) est conçue pour générer et délivrer la rétroaction en fonction du premier ou du second signal de contrôle.

7. Système de commande selon l'une des revendications précédentes,
**caractérisé en ce que**
l'élément de commande (2) est monté sur un dispositif de direction (10) du véhicule (1).

8. Procédé d'exploitation d'un système de commande pour un véhicule (1) comportant un élément de commande (2) qui présente un premier et un second état de manœuvre, dans lequel le premier état de manœuvre de l'élément de commande (2) est un état de manœuvre activé de l'élément de commande, dans lequel, en fonction d'un actionnement, un signal d'entrée est généré, transmis à une unité fonctionnelle manœuvrable et une entrée est effectuée, et le second état de manœuvre de l'élément de commande (2) est un état de manœuvre désactivé de l'élément de commande (2), dans lequel l'actionnement de l'élément de commande (2) ne conduit à aucune commande de l'unité fonctionnelle, dans lequel l'élément de commande (2) est actuellement utilisable pour une entrée dans l'état de manœuvre activé ou n'est pas utilisable pour une entrée dans l'état de manœuvre désactivé, en fonction d'un état actuel de l'unité fonctionnelle (11) manœuvrable ou d'un programme de contrôle la contrôlant, et une unité d'éclairage (6) pour éclairer l'élément de commande (2) comportant un premier ou un second paramètre d'éclairage ; dans lequel, dans le procédé,
l'état de manœuvre de l'élément de commande (2) et une intention d'actionnement sont détectés, dans lequel l'intention d'actionnement est détectée à l'aide d'un rapprochement d'un objet d'actionnement vers l'élément de commande (2), dans lequel le rapprochement est détecté lorsqu'une distance entre l'objet d'actionnement et l'élément de commande (2) est inférieure à une valeur seuil de proximité prédéfinie ; et
le premier ou le second paramètre d'éclairage est réglé en fonction de l'état de manœuvre détecté et en fonction de l'intention d'actionnement détectée, dans lequel le premier paramètre d'éclairage est réglé après la détection de l'intention d'actionnement lorsque le premier état de manœuvre a été détecté pour l'élément de commande (2), et le second paramètre d'éclairage est réglé lorsque le second état de manœuvre a été détecté pour l'élément de commande (2).
